# EUROPEAN PATENT SPECIFICATION

(11) **EP 4 435 576 B1**
(45) Date of publication and mention of the grant of the patent: **30.09.2026**
(21) Application number: 22909809.0
(22) Date of filing: 13.12.2022
(51) Int. Cl.: G06F 3/04883, G06F 3/04847

(54) **VIDEO SWITCHING METHOD AND APPARATUS, ELECTRONIC DEVICE, AND STORAGE MEDIUM**
VIDEOUMSCHALTVERFAHREN UND -VORRICHTUNG, ELEKTRONISCHE VORRICHTUNG UND SPEICHERMEDIUM
PROCÉDÉ ET APPAREIL DE COMMUTATION VIDÉO, DISPOSITIF ÉLECTRONIQUE ET SUPPORT DE STOCKAGE

(30) Priority: 24.12.2021 CN 202111597471
(43) Date of publication of application: 25.09.2024
(73) Proprietor: BEIJING BYTEDANCE NETWORK TECHNOLOGY CO., LTD., Beijing 100041 (CN)
(72) Inventor: LI, Zhaoxuan, Beijing 100086 (CN)
(74) Representative: Marks & Clerk LLP
(86) International application number: PCT/CN2022/138521
(87) International publication number: WO 2023/116495

(56) References cited:
- CN-A- 105 528 173
- CN-A- 111 770 384
- CN-A- 113 535 063
- CN-A- 113 552 994
- US-A1- 2017 192 642
- US-A1- 2017 238 043

## Description

The present application claims the priority to Chinese Patent Application No. 202111597471.1, filed on December 24, 2021.

### TECHNICAL FIELD

Embodiments of the present disclosure relate to the technical field of intelligent terminals, for example, to a video switching method and apparatus, an electronic device, and a storage medium.

### BACKGROUND

In the field of short videos, users are provided with browsing content with a continuously updated information stream. In a browsing interface of the video information stream, there are usually many operable elements, such as a like button, a comment button, video description content and so on. However, when the user slides up and down a screen of a mobile phone to switch between videos, an accidental touch event is likely to occur after the user accidentally clicks an operable element on the video, which causes accidental touch and affects the short video browsing experience. US20170238043A1 discloses a method of touch gesture control of video playback. In US20170238043A1: the method includes providing a video item for playback. The method also receives an indication of a touch gesture made by a user of mobile user device. The method further determines whether the touch gesture is a swipe gesture within a portion of a user interface (UI) including a media player to play the video item. The method also moves the playback of the video item from a first point in time to a second point in time by a predetermined amount of time in response to determining the touch gesture is the swipe gesture within the portion of the UI comprising the media player.

### SUMMARY

The embodiments of the present disclosure provide a video switching method and apparatus, an electronic device, and a storage medium, which may reduce the probability of accidental operation events caused by nonstandard sliding operation gestures, improve the accuracy of recognition of user's operation intentions, and improve the user experience.

The invention is set out in the appended set of claims.

### BRIEF DESCRIPTION OF DRAWINGS

Throughout the drawings, the same or similar reference numerals indicate the same or similar elements. It should be understood that the drawings are illustrative and the components and elements are not necessarily drawn to scale.
Fig. 1 is a schematic flow diagram of a video switching method provided by an embodiment of the present disclosure;
Fig. 2 is a schematic diagram of a sliding gesture on a video information interface provided by an embodiment of the present disclosure;
Fig. 3 is a schematic diagram of a start position of a touch operation being at a preset feature position provided by an embodiment of the present disclosure;
Fig. 4 is a schematic diagram of movement of a video information display interface provided by an embodiment of the present disclosure;
Fig. 5 is a schematic diagram of a button click event judgment strategy provided by an embodiment of the present disclosure;
Fig. 6 is a schematic flow diagram of a video switching method provided by another embodiment of the present disclosure;
Fig. 7 is a schematic diagram of a start position of a touch operation being at a preset feature position provided by another embodiment of the present disclosure;
Fig. 8 is a schematic structural diagram of a video switching apparatus provided by an embodiment of the present disclosure; and
Fig. 9 is a schematic structural diagram of an electronic device provided by an embodiment of the present disclosure.

### DETAILED DESCRIPTION

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are openended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

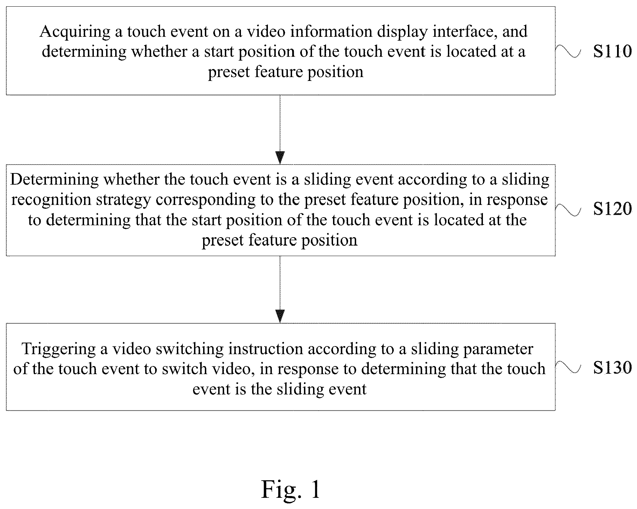

Fig. 1 is a schematic flow diagram of a video switching method provided by an embodiment of the present disclosure. The embodiments of the present disclosure are suitable for a scenario of video stream data switching, especially for a situation of a video stream switching operation on a short video playing platform. The method may be executed by a video switching apparatus, which may be implemented in the form of software and/or hardware, and may be configured in an electronic device, such as a mobile terminal or a server device.

As shown in Fig. 1, the video switching method provided by this embodiment includes:
S110: acquiring a touch event on a video information display interface, and determining whether a start position of the touch event is located at a preset feature position.

The video information display interface may be any application client interface for video playback. In this video information display interface, not only a video may be played, but also video information may be switched by a sliding operation. Especially in the field of short video technologies, the video information display interface is also referred to as a Feed stream browsing interface, and users may also interact with video information by clicking interactive buttons such as a like button, a share button, a comment button, a favorite button and an avatar button, or video description text and other information. The video description text includes a video introduction, topic tags related to video content and other information.

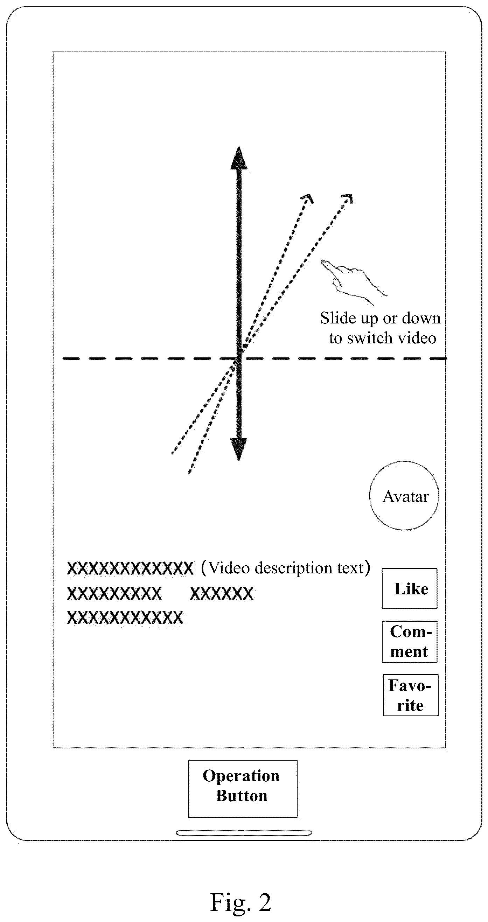

Usually, the user may switch video information by a gesture of sliding up and down, i.e., sliding up to switch to a next video of a current video and sliding down to switch to a previous video of the current video. The sliding direction may be in opposite correspondence or other correspondence with a sequence rule of video switching. It should be noted here that in this embodiment, it is exemplified by sliding up to switch to the next video of the current video and sliding down to switch to the previous video of the current video, and the sliding gesture for video switching may be shown as Fig. 2, where Fig. 2 shows a specific example of a video information interface.

For example, in Fig. 2, an arrow in a vertical direction in the video information display interface indicates the sliding in the vertical direction, but it is not necessary to execute the sliding operation absolutely vertically in a process of a sliding operation by the user, and the sliding operation of the user may be recognized as long as it is within a range of a preset compatible angle, and an action instruction corresponding to the sliding operation may be executed. Usually, when using View pager as a view page-turning toolkit, in video switching, a default compatible angle of the sliding operation is 45 degrees, that is, sliding up between 0 degree and 45 degrees can trigger Feed stream switching. In Fig. 2, an included angle between a dashed arrow and a solid arrow is an included angle between the sliding operation at different angles and the vertical direction of the video information display interface.

In the video information interface, in addition to the specific video content display, it also includes interactive buttons such as an avatar of a video content creator, a like button, a share button, a comment button, a favorite button and an avatar button, or video description text, and other information. When the user directly contacts with the video information display interface or indirectly contacts with the video information display interface with other tools, the touch event on the video information display interface may be acquired. When the user touches and slides on the video information display interface, the user often touches interactive buttons or video description text and other information. At this time, a client needs to identify what the user's real operation intention is, whether it is to slide to switch video information or click a button or trigger a corresponding operation. In this case, the possibility of an accidental touch operation is high.

For example, in this embodiment, when a touch event is acquired, considering the possibility of accidental touch, it is necessary to first determine whether the start position of the touch event is at the preset feature position, that is, a position of a preset interactive function button and a position of video information description content on the video information display interface. Each preset interactive function button is a view at an upper layer of a Feed stream view, and all the video information description content is on one view.

For example, when a touch event is acquired, the coordinate position of a touch point on a client display interface may be determined. The preset feature position is position information recorded when video information is initialized. The coordinate position information of the start position of the touch event may be matched with the position information of the preset feature position, so as to determine whether the start position of the touch event is at the preset feature position according to a matching result.

S 120: determining whether the touch event is a sliding event according to a sliding recognition strategy corresponding to the preset feature position, in response to determining that the start position of the touch event is located at the preset feature position.

In response to determining that the start position of the touch event is located at the feature position, it is necessary to consider whether the transfer of the touch event is processed by the Feed stream view layer or by the view layer where the button or video text description content is located. Then it is necessary to perform separate processing and analysis according to specific types of preset feature positions, and the possibility of accidental touch of the sliding operation may be reduced by enlarging the compatible angle of the sliding operation and/or by other measures.

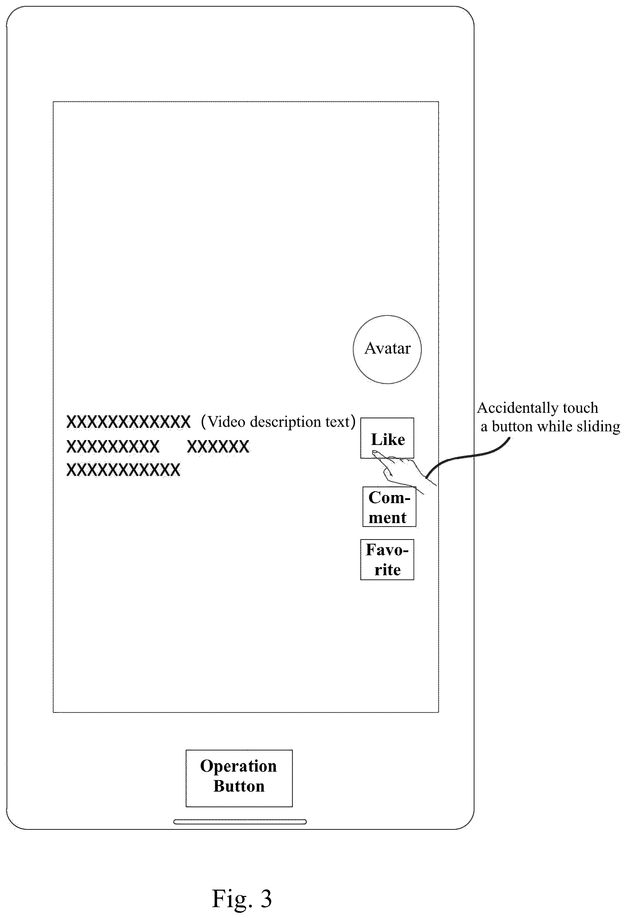

Exemplarily, the preset feature position where the start position of the touch event is located is taken as the position where the preset interactive function button is located. In Fig. 3, the user performs a touch operation on the video information display interface through a gesture and a corresponding sliding trajectory is generated, but the start position of the sliding trajectory falls within the scope of the like button. Firstly, an included angle between a moving trajectory and a vertical direction of the video information display interface may be determined according to the coordinate position of the moving trajectory of the touch event. For example, a straight line may be determined by position coordinates of first few touch points in the moving trajectory, and the included angle between the straight line and the vertical direction of the video information display interface is determined; or an included angle between a tangent line of the moving trajectory of the touch operation and the vertical direction of the video information display interface is calculated. In response to determining that the obtained included angle is less than a preset included angle threshold, it is determined that the touch event is a sliding event rather than a button click triggering event. The preset included angle threshold is greater than a default sliding angle threshold in a scenario using the preset view page-turning toolkit, which may be 50 or 60 degrees, etc. Assuming that 60 degrees is taken as the preset included angle threshold, the video sliding operation may be triggered in response to determining that the included angle between the moving trajectory of the touch event and the vertical direction of the video information display interface is less than 60 degrees, that is, the angle is enlarged, so that the touch event is more easily intercepted by the Feed stream view layer and the probability of button accidental touch is reduced.

S130: triggering a video switching instruction according to a sliding parameter of the touch event to switch video, in response to determining that the touch event is the sliding event.

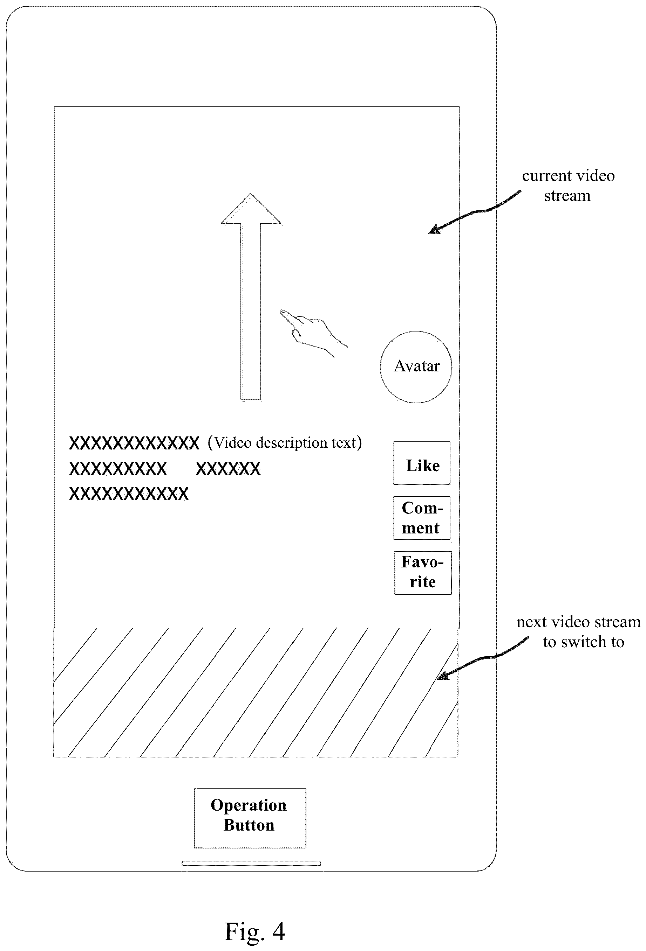

In response to determining that the touch event is a sliding event, that is, the sliding event is successfully intercepted by the Feed stream view layer, then it may be determined whether the sliding event can trigger the switching of the video stream. For example, it may be determined according to the distance and speed of the video information display interface moving with the sliding gesture. For example, during a process of executing the sliding event, when a moving distance of the video information display interface is greater than a first moving distance reference value (for example, 40% of the distance in the vertical direction of a terminal screen), or, when the moving distance of the video information display interface is greater than a second moving distance reference value and the moving speed is greater than a preset speed reference value, a video switching instruction is triggered to switch video. The moving distance reference value and the preset speed reference value may be set statistically according to empirical values. As shown in Fig. 4, under the operation of the sliding gesture, a currently displayed video streaming interface is moved upward, and a next video streaming interface (pattern filling interface) is also moved upward. When the distance and/or speed of upward movement meet the preset conditions, the video switching operation may be executed.

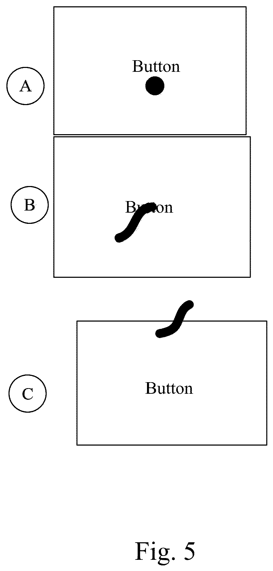

For example, in response to determining that the included angle between the moving trajectory of the touch event and the vertical direction of the video information display interface is greater than the preset included angle threshold, the condition that the Feed stream view layer intercepts the sliding event is not met, and the touch event is transmitted to the view layer to which the preset interactive function button belongs; then, whether the touch event is a button click event is determined according to the moving range of the touch event; and in response to determining that the touch event is a button click event, the target interactive function button is triggered and the button click operation is executed. In the schematic diagram of button touch shown in Fig. 5, a rectangular interface in part A is a BUTTON, and a circle in it indicates the start position of the touch operation of the user on the video information display interface. The moving trajectory of the touch operation is shown in part B, and the moving trajectory is kept inside the button, so that the button click event may still be triggered when the finger is lifted. The moving trajectory in part C is beyond the button (rectangle) range, so that the button click event will not be triggered when the finger is lifted.

According to technical solutions of the embodiments of the present disclosure, when the touch event on the video information display interface is acquired, it may be determined whether the start position of the touch event is at the preset feature position which is prone to an accidental touch operation; in response to determining that the start position of the touch event is at the preset feature position, a corresponding sliding recognition strategy is matched for the touch event to determine whether the touch event is a sliding event; finally, in response to determining that the touch event is a sliding event according to the corresponding sliding recognition strategy, the video switching instruction is triggered according to the sliding parameter of the touch event to switch video. According to the technical solutions disclosed in the embodiments of the present disclosure, the situations of low accuracy and high accidental operation rate in identifying user operations on the video information display interface in the related art are avoided, the probability of accidental operation events caused by nonstandard sliding operation gestures is reduced, the accuracy of recognition of user's operation intentions is improved, and the user experience is improved.

The embodiment of the present disclosure may be combined with a plurality of example solutions in the video switching method provided in the above embodiments. The video switching method provided by this embodiment describes the process of video switching in the case where the start position of the touch event falls in the feature position corresponding to the clickable description text.

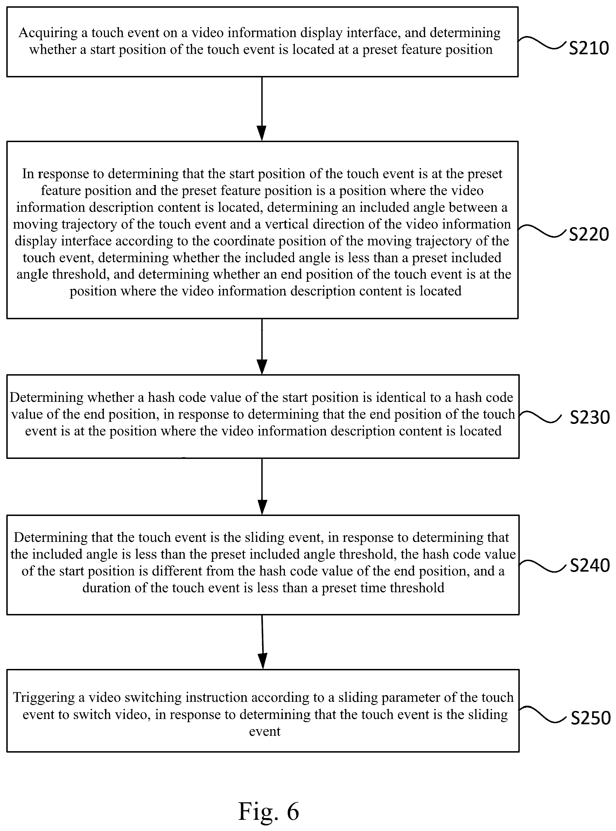

Fig. 6 is a schematic flow diagram of a video switching method provided by another embodiment of the present disclosure. As shown in Fig. 6, the video switching method provided by this embodiment includes:
S210: acquiring a touch event on a video information display interface, and determining whether a start position of the touch event is located at a preset feature position.

S220: in response to determining that the start position of the touch event is at the preset feature position and the preset feature position is a position where the video information description content is located, determining an included angle between a moving trajectory of the touch event and a vertical direction of the video information display interface according to the coordinate position of the moving trajectory of the touch event, determining whether the included angle is less than a preset included angle threshold, and determining whether an end position of the touch event is at the position where the video information description content is located.

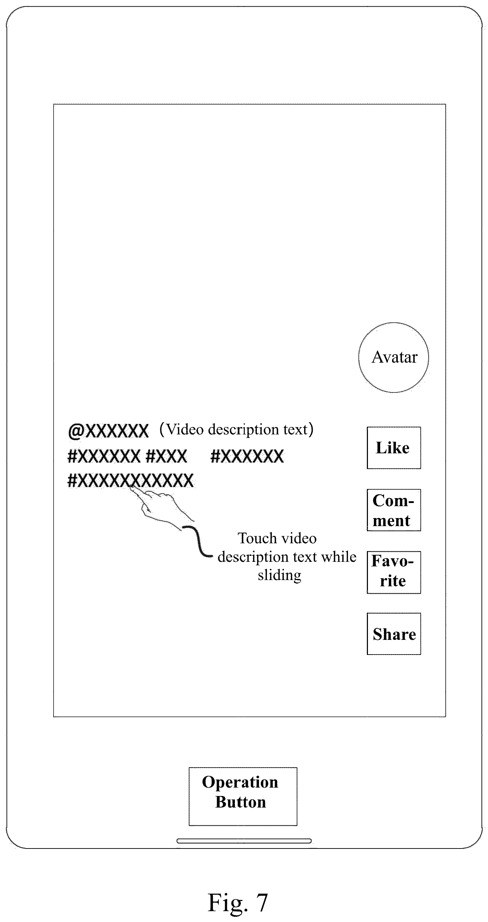

In Fig. 7, the text (indicated by X) led by a number sign (#) is the video information description content, which may also be referred to as a hash tag, which is a clickable element in the video description. The multiple hash tags in Fig. 7 are on the same view layer. Clicking on each hash tag will jump to a details page associated with different hash tags. However, because all hash tags are on one view, when the sliding operation is performed to move from one hash tag to another, the event will not be cancelled. Therefore, in response to determining that the start position of the touch event falls in the feature position where the video information description content is located, it is necessary to analyze whether the obtained touch event is a sliding event or a click event of the hash tag according to a corresponding strategy.

For example, in response to determining that the start position of the touch event is at the position where the video information description content is located, it is necessary to determine the included angle between the moving trajectory of the touch event and the vertical direction of the video information display interface according to the coordinate position of the moving trajectory of the touch event, and determine whether the included angle is less than the preset included angle threshold, and it is also necessary to determine whether the end position of the touch event also falls within an area of the video information description content. That is, it is determined whether the moving trajectory of this touch event meets the requirements under the condition of enlarging the compatible angle and whether the moving trajectory has moved. In response to determining that the included angle between the moving trajectory and the vertical direction of the video information display interface is less than a compatible angle threshold, and the end position of the touch event is beyond the area of the video information description content, step S250 may be directly executed. In response to determining that the included angle between the moving trajectory and the vertical direction of the video information display interface is greater than the compatible angle threshold, the process may be directly ended and the touch event may be processed as a click event of the hash tag. In response to determining that the included angle between the moving trajectory and the vertical direction of the video information display interface is less than the compatible angle threshold, and the end position of the touch event is at the position where the video information description content is located, step S230 is executed.

S230: determining whether a hash code value of the start position is identical to a hash code value of the end position, in response to determining that the end position of the touch event is at the position where the video information description content is located.

Whether the start position and the end position of the moving trajectory of the touch event are at different hash tag positions is determined in this step. For example, when a hash tag is touched, a hash code of the hash tag is identified and obtained, and whether it is the same hash tag is determined through the hash code. In response to determining that it is the same, a click event of the hash tag will be triggered to receive the flow, otherwise, step S240 may be executed.

S240: determining that the touch event is the sliding event, in response to determining that the included angle is less than the preset included angle threshold, the hash code value of the start position is different from the hash code value of the end position, and a duration of the touch event is less than a preset time threshold.

For example, the duration refers to a time difference between when a user presses with a finger or other operating tool and when the user lifts the finger or other operating tool during user operation on the video information interface. A judgment condition of the time difference is additionally adopted in consideration of a fact that both the sliding distance and sliding time are often short with respect to an accidental touch caused by sliding. The preset time threshold may be set to 500 ms, for example. In response to determining that the duration is greater than 500 ms, the click event is processed.

S250: triggering a video switching instruction according to a sliding parameter of the touch event to switch video, in response to determining that the touch event is the sliding event.

According to the technical solutions of the embodiments of the present disclosure, when the touch event on the video information display interface is acquired, it is determined whether the start position of the touch event is at the preset feature position which is prone to an accidental touch operation; in response to determining that the start position of the touch event is at the preset feature position where the video information description content is located, the corresponding sliding recognition strategy is adopted to determine whether the touch event is a sliding event from the included angle between the sliding trajectory of the touch event and the vertical direction of the interface, the end position of the touch operation, the duration of the touch operation and the like; finally, in response to determining that the touch event is one sliding event according to the corresponding sliding recognition strategy, the video switching instruction is triggered according to the sliding parameter of the touch event to switch video. According to the technical solutions disclosed in the embodiments of the present disclosure, the situations of low accuracy and high accidental operation rate in identifying user operations on the video information display interface in the related art are avoided, the probability of accidental operation events caused by nonstandard sliding operation gestures is reduced, the accuracy of recognition of user's operation intentions is improved, and the user experience is improved.

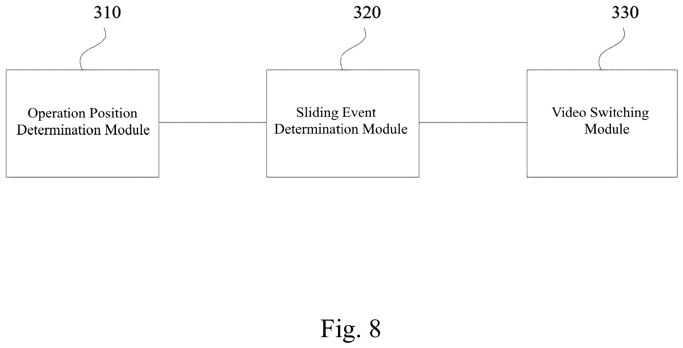

Fig. 8 is a schematic structural diagram of a video switching apparatus provided by an embodiment of the present disclosure. The video switching apparatus provided by this embodiment is suitable for a scenario of video stream data switching, especially for a situation of a video stream switching operation on a short video playing platform.

As shown in Fig. 8, the video switching apparatus includes an operation position determination module 310, a sliding event determination module 320, and a video switching module 330.

The operation position determination module 310 is configured to acquire a touch event on a video information display interface, and determine whether a start position of the touch event is located at a preset feature position; the sliding event determination module 320 is configured to determine whether the touch event is a sliding event according to a sliding recognition strategy corresponding to the preset feature position, in response to determining that the start position of the touch event is located at the preset feature position; and the video switching module 330 is configured to trigger a video switching instruction according to a sliding parameter of the touch event to switch video, in response to determining that the touch event is the sliding event.

According to the technical solutions of the embodiments of the present disclosure, when the touch event on the video information display interface is acquired, it is determined whether the start position of the touch event is at the preset feature position which is prone to an accidental touch operation; in response to determining that the start position of the touch event is at the preset feature position, a corresponding sliding recognition strategy is matched for the touch event to determine whether the touch event is a sliding event; finally, in response to determining that the touch event is a sliding event according to the corresponding sliding recognition strategy, the video switching instruction is triggered according to the sliding parameter of the touch event to switch video. According to the technical solutions disclosed in the embodiments of the present disclosure, the situations of low accuracy and high accidental operation rate in identifying user operations on the video information display interface in the related art are avoided, the probability of accidental operation events caused by nonstandard sliding operation gestures is reduced, the accuracy of recognition of user's operation intentions is improved, and the user experience is improved.

For example, the preset feature position includes a position where a preset interactive function button is located and a position where video information description content is located, on the video information display interface.

For example, in response to determining that the preset feature position is the position where the preset interactive function button is located, the sliding event determination module 320 is configured to:
determine an included angle between a moving trajectory of the touch event and a vertical direction of the video information display interface, according to the coordinate position of the moving trajectory of the touch event;
and determine that the touch event is the sliding event in response to determining that the included angle is less than a preset included angle threshold, where the preset included angle threshold is greater than a default sliding angle threshold in a scenario using a preset view page-turning toolkit.

For example, in response to determining that the preset feature position is the position where the video information description content is located, the sliding event determination module 320 is configured to:
determine whether an end position of the touch event is at the position where the video information description content is located;
determine whether a hash code value of the start position is identical to a hash code value of the end position, in response to determining that the end position of the touch event is at the position where the video information description content is located;
and determine that the touch event is the sliding event, in response to determining that the included angle is less than the preset included angle threshold, the hash code value of the start position is different from the hash code value of the end position, and a duration of the touch event is less than a preset time threshold.

For example, the video switching apparatus includes a non-video switching event processing module configured to:
transmit the touch event to a view layer to which the preset interactive function button belongs in response to determining that the included angle is greater than the preset included angle threshold;
determine whether the touch event is a button click event according to a moving range of the touch event;
and trigger a target interactive function button and execute a button click operation in response to determining that the touch event is a button click event.

For example, the non-video switching event processing module may also be configured to:
transmit the touch event to the view layer to which the video information description content belongs, in response to determining that the included angle is greater than the preset included angle threshold, or in response to determining that the hash code value of the start position is identical to the hash code value of the end position, or in response to determining that the duration of the touch event is greater than the preset time threshold;
and determine that the touch event is a video information description content click event, and take the video information description content at the end position as a click object of the video information description content click event.

For example, the video switching module 330 is configured to:
trigger a video switching instruction to switch video, in response to determining that a moving distance of the video information display interface is greater than a first moving distance reference value, or in response to determining that the moving distance of the video information display interface is greater than a second moving distance reference value and a moving speed is greater than a preset speed reference value, during a process of executing the sliding event.

The video switching apparatus provided by the embodiments of the present disclosure can execute the video switching method provided by any embodiment of the present disclosure, and has corresponding functional modules for executing the method and beneficial effects.

It should be noted that the multiple units and modules included in the above apparatus are only divided according to functional logics, but not limited thereto, as long as the corresponding functions can be implemented; in addition, the specific names of the multiple functional units are only for the convenience of distinguishing between each other, and are not used to limit the protection scope of the disclosed embodiments.

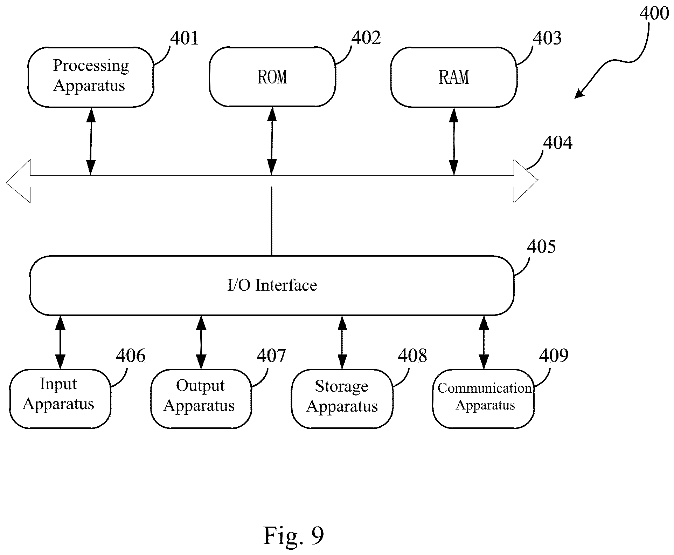

Referring to Fig. 9, Fig. 9 illustrates a schematic structural diagram of an electronic device 400 (for example, a terminal device or a server) suitable for implementing the embodiments of the present disclosure. The electronic devices in the embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), and fixed terminals such as a digital TV, a desktop computer, or the like. The electronic device illustrated in Fig. 9 is merely an example, and should not pose any limitation to the functions and the range of use of the embodiments of the present disclosure.

As illustrated in Fig. 9, the electronic device 400 may include a processing apparatus 401 (e.g., a central processing unit, a graphics processing unit, etc.), which can perform various suitable actions and processing according to a program stored in a read-only memory (ROM) 402 or a program loaded from a storage apparatus 408 into a random-access memory (RAM) 403. The RAM 403 further stores various programs and data required for operations of the electronic device 400. The processing apparatus 401, the ROM 402, and the RAM 403 are interconnected through a bus 404. An input/output (I/O) interface 405 is also connected to the bus 404.

Usually, the following apparatuses may be connected to the I/O interface 405: an input apparatus 406 including, for example, a touch screen, a touch pad, a keyboard, a mouse, a camera, a microphone, an accelerometer, a gyroscope, or the like; an output apparatus 407 including, for example, a liquid crystal display (LCD), a loudspeaker, a vibrator, or the like; a storage apparatus 408 including, for example, a magnetic tape, a hard disk, or the like; and a communication apparatus 409. The communication apparatus 409 may allow the electronic device 400 to be in wireless or wired communication with other devices to exchange data. While Fig. 9 illustrates the electronic device 400 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 409 and installed, or may be installed from the storage apparatus 408, or may be installed from the ROM 402. When the computer program is executed by the processing apparatus 401, the above-mentioned functions defined in the methods of some embodiments of the present disclosure are performed.

The electronic device provided by the embodiment of the present disclosure belongs to the same disclosed concept as the video switching method provided by the embodiment above, technical details that are not described in detail in the present embodiment may be referred to the embodiments above, and the present embodiment has the same advantageous effects as the embodiments above.

The embodiments of the present disclosure provide a computer storage medium, on which a computer program is stored, and the computer program, when executed by a processor, implements the video switching method provided in the embodiments above.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, which, when executed by the electronic device, enable the electronic device to:
acquire a touch event on a video information display interface, and determine whether a start position of the touch event is located at a preset feature position;
determine whether the touch event is a sliding event according to a sliding recognition strategy corresponding to the preset feature position, in response to determining that the start position of the touch event is located at the preset feature position;
and trigger a video switching instruction according to a sliding parameter of the touch event to switch video, in response to determining that the touch event is the sliding event.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, a data generation module may also be described as a "video data generation module".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable subcombinations.

## Claims

1. A video switching method, the method comprises:
acquiring (S110) a touch event on a video information display interface, and determining whether a start position of the touch event is located at a preset feature position, wherein the preset feature position is position information recorded when video information is initialized, and the preset feature position comprises a position where a preset interactive function button is located and a position where video information description content is located, on the video information display interface;
determining (S120) whether the touch event is a sliding event according to a recognition strategy corresponding to the preset feature position, in response to determining that the start position of the touch event is located at the preset feature position; and
triggering (S130) a video switching instruction according to a sliding parameter of the touch event to switch video, in response to determining that the touch event is the sliding event.

2. The method according to claim 1, wherein in response to determining that the preset feature position is the position where the preset interactive function button is located, the determining whether the touch event is the sliding event according to a recognition strategy corresponding to the preset feature position, comprises:
determining an included angle between a moving trajectory of the touch event and a vertical direction of the video information display interface, according to a coordinate position of the moving trajectory of the touch event; and
determining that the touch event is the sliding event in response to determining that the included angle is less than a preset included angle threshold, wherein the preset included angle threshold is greater than a default sliding angle threshold in a scenario using a preset view page-turning toolkit.

3. The method according to claim 2, wherein in response to determining that the preset feature position is the position where the video information description content is located, the determining whether the touch event is the sliding event according to a recognition strategy corresponding to the preset feature position, further comprises:
determining (S220) whether an end position of the touch event is at the position where the video information description content is located;
determining (S230) whether a hash code value of the start position is identical to a hash code value of the end position, in response to determining that the end position of the touch event is at the position where the video information description content is located; and
determining (S240) that the touch event is the sliding event, in response to determining that the included angle is less than the preset included angle threshold, that the hash code value of the start position is different from the hash code value of the end position, and that a duration of the touch event is less than a preset time threshold.

4. The method according to claim 2, further comprising:
transmitting the touch event to a view layer to which a preset interactive function button belongs in response to determining that the included angle is greater than the preset included angle threshold;
determining whether the touch event is a button click event according to a moving range of the touch event; and
triggering a target interactive function button and executing a button click operation, in response to determining that the touch event is the button click event.

5. The method according to claim 3, further comprising:
transmitting the touch event to a view layer to which the video information description content belongs in response to determining that one of the following conditions is met: the included angle being greater than the preset included angle threshold, the hash code value of the start position being identical to the hash code value of the end position, and the duration of the touch event being greater than the preset time threshold; and
determining that the touch event is a video information description content click event, and taking video information description content at the end position as a click object of the video information description content click event.

6. The method according to claim 1, wherein the triggering the video switching instruction according to the sliding parameter of the touch event to switch video, comprises:
triggering the video switching instruction to switch video in response to determining that a moving distance of the video information display interface is greater than a first moving distance reference value, or in response to determining that the moving distance of the video information display interface is greater than a second moving distance reference value and a moving speed is greater than a preset speed reference value, during a process of executing the sliding event.

7. An electronic device, comprising:
one or more processors; and
a storage apparatus, configured to store one or more programs,
wherein the one or more programs, when executed by the one or more processors, enable the one or more processors to implement the video switching method according to any one of claims 1 to 6.

8. A storage medium, comprising computer-executable instructions, wherein the computer-executable instructions, when executed by a computer processor, are configured to execute the video switching method according to any one of claims 1-6.

## Patentansprüche

1. Videoumschaltverfahren, wobei das Verfahren umfasst:
Erfassen (S110) eines Berührungsereignisses auf einer Anzeigeoberfläche für Videoinformationen und Bestimmen, ob sich eine Startposition des Berührungsereignisses an einer voreingestellten Merkmalsposition befindet, wobei die voreingestellte Merkmalsposition Positionsinformationen sind, die aufgezeichnet werden, wenn Videoinformationen initialisiert werden, und die voreingestellte Merkmalsposition eine Position, an der sich eine voreingestellte interaktive Funktionsschaltfläche befindet, und eine Position, an der sich Beschreibungsinhalt von Videoinformationen befindet, auf der Anzeigeoberfläche für Videoinformationen umfasst;
in Reaktion auf Bestimmen, dass sich die Startposition des Berührungsereignisses an der voreingestellten Merkmalsposition befindet, Bestimmen (S120), gemäß einer der voreingestellten Merkmalsposition entsprechenden Erkennungsstrategie, ob das Berührungsereignis ein Wischereignis ist; und
in Reaktion auf Bestimmen, dass das Berührungsereignis das Wischereignis ist, Auslösen (S130) einer Videoumschaltanweisung gemäß einem Wischparameter des Berührungsereignisses, um das Video umzuschalten.

2. Verfahren nach Anspruch 1, wobei in Reaktion auf Bestimmen, dass die voreingestellte Merkmalsposition die Position ist, an der sich die voreingestellte interaktive Funktionsschaltfläche befindet, das Bestimmen, gemäß einer der voreingestellten Merkmalsposition entsprechenden Erkennungsstrategie, ob das Berührungsereignis das Wischereignis ist, umfasst:
Bestimmen eines eingeschlossenen Winkels zwischen einer Bewegungsbahn des Berührungsereignisses und einer vertikalen Richtung der Anzeigeoberfläche für Videoinformationen gemäß einer Koordinatenposition der Bewegungsbahn des Berührungsereignisses; und
Bestimmen, in Reaktion auf das Bestimmen, dass der eingeschlossene Winkel kleiner ist als eine voreingestellte Schwelle für den eingeschlossenen Winkel, dass das Berührungsereignis das Wischereignis ist, wobei die voreingestellte Schwelle für den eingeschlossenen Winkel größer ist als eine Standardschwelle für den Wischwinkel in einem Szenario, bei dem ein voreingestelltes Toolkit zum Umblättern von Ansichtsseiten verwendet wird.

3. Verfahren nach Anspruch 2, wobei in Reaktion auf Bestimmen, dass die voreingestellte Merkmalsposition die Position ist, an der sich der Beschreibungsinhalt von Videoinformationen befindet, das Bestimmen, gemäß einer der voreingestellten Merkmalsposition entsprechenden Erkennungsstrategie, ob das Berührungsereignis das Wischereignis ist, weiter umfasst:
Bestimmen (S220), ob sich eine Endposition des Berührungsereignisses an der Position befindet, an der sich der Beschreibungsinhalt von Videoinformationen befindet;
in Reaktion auf Bestimmen, dass sich die Endposition des Berührungsereignisses an der Position befindet, an der sich der Beschreibungsinhalt von Videoinformationen befindet, Bestimmen (S230), ob ein Hash-Code-Wert der Startposition mit einem Hash-Code-Wert der Endposition identisch ist; und
in Reaktion auf Bestimmen, dass der eingeschlossene Winkel kleiner ist als die voreingestellte Schwelle für den eingeschlossenen Winkel, dass sich der Hash-Code-Wert der Startposition von dem Hash-Code-Wert der Endposition unterscheidet und dass eine Dauer des Berührungsereignisses kleiner ist als eine voreingestellte Zeitschwelle, Bestimmen (S240), dass das Berührungsereignis das Wischereignis ist.

4. Verfahren nach Anspruch 2, weiter umfassend:
Übertragen des Berührungsereignisses an eine Ansichtsebene, zu der eine voreingestellte interaktive Funktionsschaltfläche gehört, in Reaktion auf das Bestimmen, dass der eingeschlossene Winkel größer ist als die voreingestellte Schwelle für den eingeschlossenen Winkel;
Bestimmen, gemäß einem Bewegungsbereich des Berührungsereignisses, ob das Berührungsereignis ein Schaltflächen-Klickereignis ist; und
Auslösen einer interaktiven Zielfunktionsschaltfläche und Ausführen eines Schaltflächen-Klickvorgangs in Reaktion auf Bestimmen, dass das Berührungsereignis das Schaltflächen-Klickereignis ist.

5. Verfahren nach Anspruch 3, weiter umfassend:
Übertragen des Berührungsereignisses an eine Ansichtsebene, zu der der Beschreibungsinhalt von Videoinformationen gehört, in Reaktion auf Bestimmen, dass eine der folgenden Bedingungen erfüllt ist: der eingeschlossene Winkel ist größer als die voreingestellte Schwelle für den eingeschlossenen Winkel, der Hash-Code-Wert der Startposition ist mit dem Hash-Code-Wert der Endposition identisch und die Dauer des Berührungsereignisses ist größer als die voreingestellte Zeitschwelle; und
Bestimmen, dass das Berührungsereignis ein Klickereignis auf Beschreibungsinhalt von Videoinformationen ist, und Hernehmen von Beschreibungsinhalt von Videoinformationen an der Endposition als Klickobjekt des Klickereignisses auf Beschreibungsinhalt von Videoinformationen.

6. Verfahren nach Anspruch 1, wobei das Auslösen der Videoumschaltanweisung gemäß dem Wischparameter des Berührungsereignisses, um ein Video umzuschalten, umfasst:
Auslösen der Videoumschaltanweisung, um das Video umzuschalten, in Reaktion auf Bestimmen, dass eine Bewegungsstrecke der Anzeigeoberfläche für Videoinformationen größer ist als ein erster Bewegungsstrecken-Referenzwert, oder in Reaktion auf Bestimmen, dass die Bewegungsstrecke der Anzeigeoberfläche für Videoinformationen größer ist als ein zweiter Bewegungsstrecken-Referenzwert und eine Bewegungsgeschwindigkeit größer ist als ein voreingestellter Geschwindigkeits-Referenzwert, während eines Prozesses des Ausführens des Wischereignisses.

7. Elektronische Vorrichtung, umfassend:
einen oder mehrere Prozessoren; und
eine Speichereinrichtung, die so konfiguriert ist, dass sie ein oder mehrere Programme speichert,
wobei das eine oder die mehreren Programme, wenn sie von dem einen oder den mehreren Prozessoren ausgeführt werden, es dem einen oder den mehreren Prozessoren ermöglichen, das Videoumschaltverfahren nach einem der Ansprüche 1 bis 6 zu implementieren.

8. Speichermedium, das computerausführbare Anweisungen umfasst, wobei die computerausführbaren Anweisungen so konfiguriert sind, dass sie, wenn sie von einem Computerprozessor ausgeführt werden, das Videoumschaltverfahren nach einem der Ansprüche 1-6 ausführen.

## Revendications

1. Procédé de commutation vidéo, le procédé comprenant :
l'acquisition (S110) d'un événement tactile sur une interface d'affichage d'informations vidéo, et la détermination du fait de savoir si une position de départ de l'événement tactile est située à une position de fonction prédéfinie, dans lequel la position de fonction prédéfinie est une information de position enregistrée lorsque des informations vidéo sont initialisées, et la position de fonction prédéfinie comprend une position où se trouve un bouton de fonction interactive prédéfini et une position où se trouve le contenu de description des informations vidéo, sur l'interface d'affichage d'informations vidéo ;
la détermination (S120) du fait de savoir si l'événement tactile est un événement de glissement selon une stratégie de reconnaissance correspondant à la position de fonction prédéfinie, en réponse à la détermination du fait que la position de départ de l'événement tactile est située à la position de fonction prédéfinie ; et
le déclenchement (S130) d'une instruction de commutation vidéo en fonction d'un paramètre de glissement de l'événement tactile pour commuter la vidéo, en réponse à la détermination du fait que l'événement tactile est l'événement de glissement.

2. Procédé selon la revendication 1, dans lequel, en réponse à la détermination du fait que la position de fonction prédéfinie est la position où se trouve le bouton de fonction interactive prédéfini, la détermination de fait de savoir si l'événement tactile est l'événement de glissement selon une stratégie de reconnaissance correspondant à la position de fonction prédéfinie comprend :
la détermination d'un angle inclus entre une trajectoire de déplacement de l'événement tactile et une direction verticale de l'interface d'affichage d'informations vidéo, en fonction d'une position de coordonnées de la trajectoire de déplacement de l'événement tactile ; et
la détermination du fait que l'événement tactile est l'événement de glissement en réponse à la détermination du fait que l'angle inclus est inférieur à un seuil d'angle inclus prédéfini, dans lequel le seuil d'angle inclus prédéfini est supérieur à un seuil d'angle de glissement par défaut dans un scénario utilisant une boîte à outils de changement de page de vue prédéfinie.

3. Procédé selon la revendication 2, dans lequel, en réponse à la détermination du fait que la position de fonction prédéfinie est la position où se trouve le contenu de description des informations vidéo, la détermination de fait de savoir si l'événement tactile est l'événement de glissement selon une stratégie de reconnaissance correspondant à la position de fonction prédéfinie comprend en outre :
la détermination (S220) du fait de savoir si une position finale de l'événement tactile se trouve à la position où se trouve le contenu de description des informations vidéo ;
la détermination (S230) du fait de savoir si une valeur de code de hachage de la position de début est identique à une valeur de code de hachage de la position finale, en réponse à la détermination du fait que la position finale de l'événement tactile est située à la position où se trouve le contenu de description des informations vidéo ; et
la détermination (S240) du fait que l'événement tactile est l'événement de glissement, en réponse à la détermination du fait que l'angle inclus est inférieur au seuil d'angle inclus prédéfini, que la valeur de code de hachage de la position de départ est différente de la valeur de code de hachage de la position finale, et qu'une durée de l'événement tactile est inférieure à un seuil de temps prédéfini.

4. Procédé selon la revendication 2, comprenant en outre :
la transmission de l'événement tactile à une couche de vue à laquelle appartient un bouton de fonction interactive prédéfini en réponse à la détermination du fait que l'angle inclus est supérieur au seuil d'angle inclus prédéfini ;
la détermination du fait de savoir si l'événement tactile est un événement de clic de bouton en fonction d'une plage de déplacement de l'événement tactile ; et
le déclenchement d'un bouton de fonction interactive cible et l'exécution d'une opération de clic de bouton, en réponse à la détermination du fait que l'événement tactile est l'événement de clic de bouton.

5. Procédé selon la revendication 3, comprenant en outre :
la transmission de l'événement tactile à une couche de vue à laquelle appartient le contenu de description des informations vidéo, en réponse à la détermination du fait que l'une des conditions suivantes est remplie : l'angle inclus est supérieur au seuil d'angle inclus prédéfini, la valeur de code de hachage de la position de départ est identique à la valeur de code de hachage de la position finale, et la durée de l'événement tactile est supérieure au seuil de temps prédéfini ; et
la détermination du fait que l'événement tactile est un événement de clic de contenu de description des informations vidéo, et la prise du contenu de description des informations vidéo à la position finale comme objet de clic de l'événement de clic de contenu de description des informations vidéo.

6. Procédé selon la revendication 1, dans lequel le déclenchement de l'instruction de commutation vidéo en fonction du paramètre de glissement de l'événement tactile pour commuter la vidéo comprend :
le déclenchement de l'instruction de commutation vidéo pour commuter la vidéo en réponse à la détermination du fait qu'une distance de déplacement de l'interface d'affichage des informations vidéo est supérieure à une première valeur de référence de distance de déplacement, ou en réponse à la détermination du fait que la distance de déplacement de l'interface d'affichage des informations vidéo est supérieure à une seconde valeur de référence de distance de déplacement et qu'une vitesse de déplacement est supérieure à une valeur de référence de vitesse prédéfinie, au cours d'un processus d'exécution de l'événement de glissement.

7. Dispositif électronique, comprenant :
un ou plusieurs processeurs ; et
un appareil de stockage, configuré pour stocker un ou plusieurs programmes,
dans lequel les un ou plusieurs programmes, lorsqu'ils sont exécutés par les un ou plusieurs processeurs, amènent les un ou plusieurs processeurs à mettre en œuvre le procédé de commutation vidéo selon l'une quelconque des revendications 1 à 6.

8. Support de stockage, comprenant des instructions exécutables par ordinateur, dans lequel les instructions exécutables par ordinateur, lorsqu'elles sont exécutées par un processeur d'ordinateur, sont configurées pour mettre en œuvre le procédé de commutation vidéo selon l'une quelconque des revendications 1-6.
